# EUROPÄISCHE PATENTSCHRIFT

(11) **EP 3 138 369 B1**
(45) Veröffentlichungstag und Bekanntmachung des Hinweises auf die Patenterteilung: **04.04.2018**
(21) Anmeldenummer: 15718494.6
(22) Anmeldetag: 27.04.2015
(51) Int. Cl.: H05B 37/02, H05B 33/08

(54) **VERFAHREN ZUM BETREIBEN EINER LEUCHTE MIT MEHREREN HINTEREINANDER ANGEORDNETEN LEUCHTMITTEL-EINHEITEN**
METHOD FOR OPERATING A LIGHT HAVING A PLURALITY OF LIGHTING UNITS WHICH ARE ARRANGED BEHIND EACH OTHER
PROCÉDÉ POUR FAIRE FONCTIONNER UN LUMINAIRE COMPRENANT PLUSIEURS ENSEMBLES D'ÉLÉMENTS D'ÉCLAIRAGE INSTALLÉS EN SÉRIE

(30) Priorität: 30.04.2014 DE 102014208196
(43) Veröffentlichungstag der Anmeldung: 08.03.2017
(73) Patentinhaber: Zumtobel Lighting GmbH, 6850 Dornbirn (AT)
(72) Erfinder: JOPPI, René, 6850 Dornbirn (AT)
(74) Vertreter: Thun, Clemens
(86) Internationale Anmeldenummer: PCT/EP2015/059066
(87) Internationale Veröffentlichungsnummer: WO 2015/165846

(56) Entgegenhaltungen:
- DE-A1-102010 031 242
- DE-U1-202012 103 365

## Beschreibung

Die vorliegende Erfindung betrifft ein Verfahren zum Betreiben einer Leuchte, welche mehrere hintereinander angeordnete Leuchtmitteleinheiten aufweist, die hinsichtlich ihrer Lichtabgabe individuell steuerbar sind. Ferner betrifft die Erfindung eine entsprechende Leuchte mit mehreren hintereinander angeordneten Leuchtmitteleinheiten.

Durch den vermehrten Einsatz von LEDs in der Beleuchtungstechnologie ändert sich der Aufbau und das Erscheinungsbild von Leuchten immer mehr. Während in der Vergangenheit bei Leuchten mit klassischen Lichtquellen wie insbesondere Leuchtstofflampen nur wenige einzelne Lampen zum Einsatz kamen, stellen LEDs eher kleine kompakte Lichtquellen dar, welche in unterschiedlichsten Anordnungen zum Einsatz kommen, um beispielsweise eine großflächige oder längliche Lichtabgabe zu erzielen. Während sich Leuchtstofflampen oder allgemein Gasentladungslampen in der Regel über die gesamte Länge einer Leuchte hinweg erstreckten und dementsprechend lediglich eine einzige Lichtquelle oder mehrere Lichtquellen anzusteuern waren, sind nunmehr die LEDs oftmals in so genannten Leuchtmodulen oder Leuchtmitteleinheiten zusammengefasst, von denen mehrere kombiniert die gesamten Leuchtmittel der Leuchte bilden. Diese Leuchtmodule sind dann beispielsweise matrixartig oder in einer länglichen Anordnung hintereinander angeordnet.

Die Offenlegungsschrift DE 10 2010 031 242 A1 offenbart ein LED-Beleuchtungssystem und implizit ein Verfahren zum Betreiben einer Leuchte aufweisend eine Mehrheit von Gruppen von Leuchtmitteleinheiten, die individuell durch interne Sollinformationen steuerbar sind. Selbstverständlich würde bei dem Einsatz der oben beschriebenen Leuchtmodule mit den LEDs die Möglichkeit bestehen, alle Module gleichartig anzusteuern und dementsprechend eine gleichmäßige homogene Lichtabgabe über die gesamte Lichtaustrittsfläche der Leuchte hinweg zu erzielen. Um allerdings interessantere Beleuchtungseffekte oder ein ansprechenderes Erscheinungsbild erzielen zu können, ist oftmals vorgesehen, dass die Leuchtmodule individuell in ihrer Helligkeit und/oder auch im Hinblick auf die Frage des Farborts des abgegebenen Lichts eingestellt werden.

In diesem Fall stellt sich dann die Frage, inwiefern diese mehreren Leuchtmodule bzw. die Leuchte mit den mehreren Leuchtmodulen komfortabel von einer Zentrale aus angesteuert werden können. In der Regel sind Leuchten, die in größeren Gebäuden oder Gebäudekomplexen zum Einsatz kommen, in Beleuchtungssysteme eingebunden, bei denen die Ansteuerung der Leuchten zumindest teilweise von einer Zentrale des Systems vorgenommen wird. Hierzu werden von der zentralen Steuereinheit in der Regel digitale Befehle für die Helligkeits- oder Farbsteuerung an die verschiedenen Leuchten übermittelt.

Im Rahmen der digitalen Beleuchtungssteuerung hat sich dabei in den letzten Jahren insbesondere der sog. DALI (Digital Adressable Lighting Interface)-Standard durchgesetzt. Es handelt sich um einen Kommunikationsstandard zur Übermittlung von Befehlen für die Beleuchtungssteuerung, mit dem insbesondere Helligkeitsstellwerte an die an das System angeschlossenen Leuchten übertragen werden können, die dann von den Leuchten in entsprechender Weise umgesetzt werden. Im Rahmen des DALI-Standards ist dabei jedem Helligkeitsbefehl eine Adressinformation zugeordnet, die Auskunft darüber gibt, welcher Teilnehmer des Systems den von der Zentrale gesendeten Befehl umsetzen soll. Hierbei ist den Leuchten in der Regel eine individuelle Betriebsadresse zugewiesen, wobei die Leuchten dann auf Basis dieser entsprechenden Betriebsadresse individuell angesteuert werden können. Ergänzend hierzu besteht auch die Möglichkeit, mehrere Leuchten einer Gruppe zuzuordnen, die im Rahmen eines entsprechenden Gruppen-Befehls kollektiv angesteuert wird und sich dann entsprechend gleichartig verhält.

Um tatsächlich sicherzustellen, dass bspw. jede Leuchte eines DALI-Systems individuell angesteuert werden kann, ist es also erforderlich, dass jeder Leuchte ihre eigene Betriebsadresse zugewiesen wird. Aus dem Stand der Technik ist es deshalb bekannt, bei Leuchten der oben beschriebenen Art, welche mehrere unabhängig voneinander steuerbare Einheiten zur Lichtabgabe aufweisen, den Leuchten mehrere DALI-Adressen zuzuweisen, welche dann jeweils zur Steuerung der einzelnen Einheiten genutzt werden.

Diese aus dem Stand der Technik bekannte Vorgehensweise hat sich in der Vergangenheit zwar bewährt, allerdings ist sie mit dem Nachteil verbunden, dass derartige Leuchten dann jeweils mehrere DALI-Adressen belegen. Dies ist insofern problematisch, als entsprechend dem DALI-Standard nur eine begrenzte Anzahl von Adressen zur Verfügung steht, also nicht eine beliebige Anzahl von Adressen vergeben werden kann. In der derzeitigen Version können innerhalb eines DALI-Systems maximal 64 Betriebsadressen vergeben werden, so dass bei der oben beschriebenen Vorgehensweise die Anzahl an tatsächlich ansteuerbaren Leuchten deutlich reduziert wird. Dieses Problem verstärkt sich umso mehr, je komplexer die einzelnen Leuchten aufgebaut sind, d.h., je mehr individuell steuerbare Leuchtmitteleinheiten die Leuchten aufweisen.

Darüber hinaus ist zu berücksichtigen, dass der DALI-Standard nicht unbedingt für eine umfangreiche und insbesondere schnelle Datenkommunikation ausgelegt ist. Die Stärke des DALI-Standards liegt darin, dass mit relativ kurzen und einfachen Befehlen Leuchten in ihrer Helligkeit eingestellt werden können. Wäre es nunmehr erforderlich, zum Ansteuern einer Leuchte eine Vielzahl von DALI-Helligkeitsbefehlen zu übermitteln, so würde dies die Effizienz der Helligkeitssteuerung deutlich beeinträchtigen.

Der vorliegenden Erfindung liegt deshalb die Aufgabenstellung zugrunde, eine neuartige Lösung zum Ansteuern komplexerer Leuchten zur Verfügung zu stellen, bei der die oben beschriebenen Nachteile zumindest teilweise vermieden werden.

Die Aufgabe wird durch ein Verfahren zum Betreiben einer Leuchte mit den Merkmalen des Anspruchs 1 sowie durch eine Leuchte gemäß Anspruch 10 gelöst. Vorteilhafte Weiterbildungen der Erfindung sind Gegenstand der abhängigen Ansprüche.

Die erfindungsgemäße Lösung beruht grundsätzlich auf dem Gedanken, die Gesamtheit der Leuchtmitteleinheiten in Gruppen zu unterteilen und der Leuchte dann lediglich eine der Anzahl der Gruppen entsprechende Anzahl von externen Sollinformationen zu übermitteln. Für jede Gruppe, die nachfolgend auch als sogenannter Stützpunkt bezeichnet wird, wird dabei der Leuchte eine externe Sollinformation übermittelt, welche dann die Lichtabgabe der Gruppe betrifft. Intern werden allerdings dann von der Leuchte auf Basis dieser externen Sollinformationen für jede Leuchtmitteleinheit individuelle interne Sollinformationen ermittelt. Da jede Gruppe in der Regel mehrere Leuchtmitteleinheiten beinhalten wird, insgesamt also die Anzahl der Stützpunkte deutlich geringer ist als die Gesamtanzahl der individuell steuerbaren Leuchtmitteleinheiten, kann die Anzahl der extern zu übermittelnden Sollinformationen deutlich reduziert werden. Das heißt, die Leuchte belegt insgesamt weniger Betriebsadressen und der Umfang der zu übermittelnden Daten wird deutlich reduziert.

Erfindungsgemäß wird deshalb ein Verfahren zum Betreiben einer Leuchte, welche mehrere hintereinander angeordnete Leuchtmitteleinheiten aufweist, die hinsichtlich ihrer Lichtabgabe individuell einstellbar sind, vorgeschlagen, wobei die Leuchtmitteleinheiten mindestens zwei Gruppen zugeordnet werden und der Leuchte eine der Anzahl der Gruppen entsprechende Anzahl von externen Sollinformationen übermittelt wird, welche jeweils die Lichtabgabe einer Gruppe betreffen, und wobei auf Basis der externen Sollinformationen dann für jede Leuchtmitteleinheit individuelle interne Sollinformationen ermittelt werden.

Ferner wird eine Leuchte vorgeschlagen, welche mehrere hintereinander angeordnete Leuchtmitteleinheiten aufweist, die hinsichtlich ihrer Lichtabgabe individuell einstellbar sind, wobei die Leuchtmitteleinheiten mindestens zwei Gruppen zugeordnet sind und die Leuchte eine Steuereinheit aufweist, welche dazu ausgebildet ist, eine der Anzahl der Gruppen entsprechende Anzahl von externen Sollinformationen zu empfangen und gemäß dem erfindungsgemäßen Verfahren individuelle interne Sollinformationen für die Leuchtmitteleinheiten zu erzeugen.

Im einfachsten Fall könnte vorgesehen sein, dass alle Leuchtmitteleinheiten einer Gruppe identische interne Sollinformationen erhalten und in diesem Fall dann diese internen Sollinformationen den externen Sollinformationen für diese Gruppe entsprechen. In diesem Fall muss also die interne Steuereinheit der Leuchte lediglich die empfangenen externen Sollinformationen an die entsprechenden Leuchtmitteleinheiten unverändert verteilen. Dies hätte jedoch zur Folge, dass für den Fall, dass zwei benachbarte Gruppen unterschiedliche Sollinformationen erhalten, sich im Übergangsbereich eine sprunghafte Änderung in der Lichtabgabe, beispielsweise eine sprunghafte Helligkeitsänderung oder auch eine Farbänderung ergibt.

Um deshalb das Erscheinungsbild hinsichtlich der Lichtabgabe zu verbessern, ist gemäß einer bevorzugten Ausführungsform der Erfindung vorgesehen, dass die Leuchtmitteleinheiten innerhalb einer Gruppe unterschiedliche interne Sollinformationen erhalten. Dabei kann zumindest für eine Leuchtmitteleinheit wiederum die interne Sollinformation der externen Sollinformation entsprechen, die Sollinformationen für die weiteren Leuchtmitteleinheiten werden allerdings entsprechend angepasst. Insbesondere kann vorgesehen sein, dass zumindest eine der Gruppen zumindest drei hintereinander angeordnete Leuchtmitteleinheiten umfasst, wobei die interne Sollinformation für eine Leuchtmitteleinheit, welche sich nicht am Rand der Gruppe befindet, der externen Sollinformation entspricht und die interne Sollinformation für eine weitere Leuchtmitteleinheit, welche sich am Rand der Gruppe und benachbart zu einer weiteren Gruppe befindet, unter ergänzender Berücksichtigung der externen Sollinformation für die benachbarte Gruppe ermittelt wird.

Insgesamt kann dies dazu führen, dass für jeweils eine Leuchtmitteleinheit einer Gruppe die interne Sollinformation identisch zur externen Sollinformation ist und die Sollinformationen für alle weiteren Leuchtmitteleinheiten unter Berücksichtigung ihrer Positionen ermittelt werden. Hierdurch kann ein gleichmäßigerer Verlauf hinsichtlich der Lichtabgabe erzielt werden, was beispielsweise dadurch erreicht werden kann, dass die internen Sollinformationen für die weiteren Leuchtmitteleinheiten mittels Interpolation ermittelt werden. Insbesondere könnte auch vorgesehen sein, dass durch den Anwender wählbar ist, in welcher Weise diese Übergänge realisiert werden. So könnte beispielsweise durch den Verbraucher entweder ein linearer Übergang oder ein (quasi-) logarithmischer Übergang gewählt werden.

Eine andere Weiterbildung des erfindungsgemäßen Konzepts besteht darin, dass für einzelne Gruppen vorgesehen sein kann, dass beim Ermitteln der internen Sollinformationen das Tageslicht berücksichtigt wird. Befindet sich beispielsweise eine Gruppe am Endbereich einer länglichen Leuchte in der Nähe eines Fensters, also in einem Bereich der eher vom Tageslicht beeinflusst wird, so kann vorgesehen sein, dass für diese Gruppe eine tageslichtabhängige Steuerung erfolgt, während hingegen die Leuchtmitteleinheiten der weiteren Gruppen nicht durch das Tageslicht beeinflusst werden. Auch in diesem Fall kann allerdings vorgesehen sein, dass die internen Sollinformationen für sich im Übergangsbereich zwischen zwei benachbarten Gruppen befindliche Leuchtmitteleinheiten derart angepasst werden, dass sich ein kontinuierlicher Helligkeitsverlauf ergibt, was letztendlich bedeutet, dass das Tageslicht gegebenenfalls doch auf im Randbereich einer Gruppe, die an sich nicht von dem Tageslicht beeinflusst werden soll, einen gewissen Einfluss hat.

Eine andere Weiterbildung der Erfindung kann darin bestehen, zumindest einer Gruppe eine tageszeitabhängige Dynamik zu verleihen. Die internen Sollinformationen für die betroffenen Leuchtmitteleinheiten werden dann abhängig von der Tageszeit modifiziert. Wiederum kann sich für den Fall, dass ein kontinuierlicher Helligkeitsübergang in der oben beschriebenen Weise erzielt werden soll, diese Dynamik auch auf benachbarte Gruppen auswirken.

Letztendlich wird also mit Hilfe der vorliegenden Erfindung eine effiziente und komfortable Ansteuerung der einzelnen Leuchtmitteleinheiten erzielt, wobei trotz allem die Leuchte selbst nur wenig externe Informationen benötigt. Nach außen ist die Leuchte lediglich mit einer der Anzahl der Gruppen entsprechenden Anzahl von Adressen erkennbar, intern werden jedoch deutlich mehr Leuchtmitteleinheiten individuell angesteuert. Die Montageposition der einzelnen Leuchtmitteleinheiten bestimmt dabei deren Zuordnung zu den verschiedenen Gruppen sowie deren leuchteninterne Adressierung oder Ansteuerung. Eine Kommunikation zwischen der internen Steuereinheit der Leuchten und den Leuchtmitteleinheiten kann dabei in unterschiedlicher Weise, beispielsweise über eine Steuerleitung oder aber auch drahtlos, also insbesondere über Funk erfolgen.

Nachfolgend soll die Erfindung anhand der beiliegenden Zeichnungen näher erläutert werden. Es zeigen:
- Figuren 1 bis 3: Ansichten einer Leuchte, bei der das erfindungsgemäße Konzept zur Ansteuerung der Leuchtmitteleinheiten zum Einsatz kommen soll;
- Figur 4: ein Beleuchtungssystem, in dem die erfindungsgemäße Leuchte angeordnet ist;
- Figur 5: den Grundgedanken der Gruppierung der Leuchtmitteleinheiten in verschiedene Stützstellen;
- Figuren 6a und 6b: Darstellungen zur Möglichkeit, den Verlauf der Helligkeitsänderung durch den Benutzer auszuwählen und
- Figur 7: eine Erweiterung der erfindungsgemäßen Vorgehensweise, bei der die Helligkeit der einzelnen Stützpunkte tageszeitabhängig modifiziert wird.

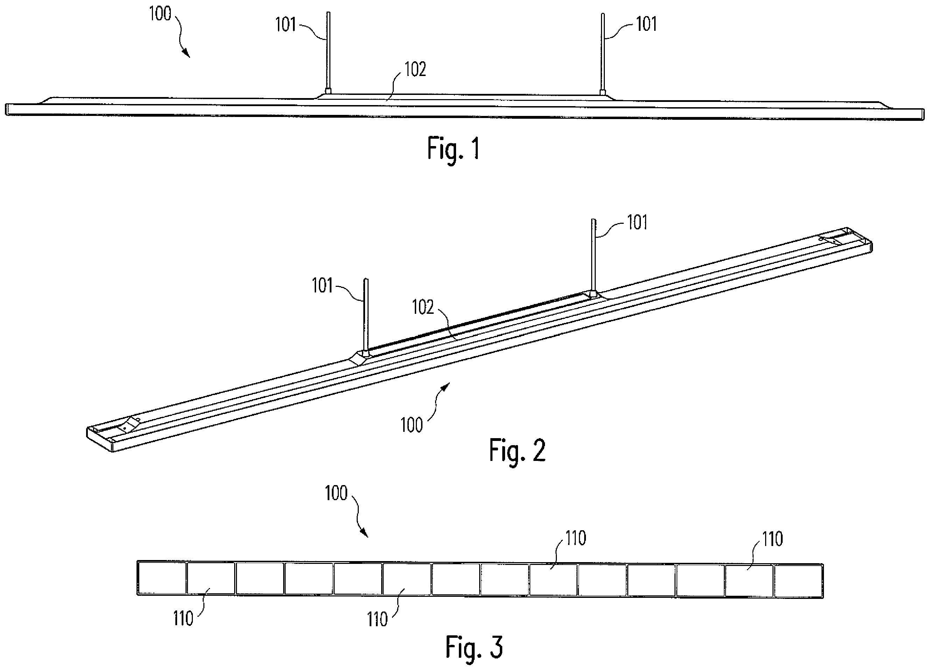

Anhand der Figur 1 bis 3 soll zunächst kurz eine Leuchte beschrieben werden, bei der das erfindungsgemäße Konzept zur Steuerung einer Vielzahl von Leuchtmitteleinheiten in besonders vorteilhafter Weise zum Einsatz kommt. Allerdings ist die Erfindung selbstverständlich nicht auf die dargestellte konkrete Ausführungsform einer Leuchte beschränkt. Auch müssen die Leuchtmittel der einzelnen Leuchtmitteleinheiten nicht zwingend durch LEDs realisiert werden, auch wenn dies selbstverständlich die bevorzugte Ausführungsform darstellt.

Die Figuren 1 und 2 zeigen dabei zunächst zwei verschiedene Ansichten einer allgemein mit dem Bezugszeichen 100 versehenen länglichen Leuchte, welche im dargestellten Ausführungsbeispiel als Pendelleuchte ausgebildet ist. Sie ist also über Aufliängungselemente, im vorliegenden Fall über zwei Seile 101 an beispielsweise der Decke eines Raums befestigt, könnte allerdings in gleicher Weise auch als Deckenanbau- oder Deckeneinbauleuchte genutzt werden.

Die Leuchte ist also insgesamt länglich ausgeführt, wobei ihre Form primär durch ein Trägerelement 102 festgelegt wird, welches das zentrale Element der Leuchte 100 darstellt und an dem alle weiteren Komponenten angeordnet bzw. befestigt sind. Das beispielsweise durch ein Aluminiumteil gebildete Trägerelement 102 weist dabei an seiner Unterseite, also der Lichtabstrahlseite der Leuchte 100 einen im Querschnitt U-förmigen, zur Unterseite hin offenen so genannten Aufnahmebereich auf. In diesem werden mehrere Leuchtmitteleinheiten bzw. Leuchtmodule auswechselbar angeordnet.

Diese Leuchtmitteleinheiten, welche in den Figuren 1 und 2 nicht näher dargestellt sind, weisen jeweils ein eigenständiges Gehäuse sowie darin angeordnete Leuchtmittel, idealerweise wie bereits erwähnt LEDs auf. Der Aufbau der einzelnen Leuchtmitteleinheiten sowie die Art und Weise, wie das von den LEDs emittierte Licht abgestrahlt wird, spielt für die vorliegende Erfindung keine Rolle und soll deshalb im Nachfolgenden nicht näher erläutert werden. Wesentlich ist, dass diese Leuchtmitteleinheiten in Längsrichtung hintereinander an dem Trägerelement 102 angeordnet werden und im an dem Trägerelement 102 angeordneten Zustand durch leuchteninterne Versorgungsleitungen mit Strom versorgt werden. Die Leuchtmitteleinheiten selbst weisen dabei eine gewisse interne Intelligenz auf, so dass sie in der Lage sind, abhängig von intern übermittelten Sollinformationen die Lichtabgabe einzustellen. Diese internen Sollinformationen können dabei sowohl die Frage der Intensität bzw. Helligkeit der Lichtabgabe als auch die Frage, der Farbe oder des Farborts betreffen. Der Einfachheit halber wird allerdings im Folgenden nur die Frage der Helligkeit betrachtet. Es ist allerdings offensichtlich, in welcher Weise das erfindungsgemäße Konzept auch auf die Farbe der Lichtabgabe erweitert werden kann.

Die einzelnen Leuchtmitteleinheiten erhalten also - wie nachfolgend noch näher beschrieben - von einer internen Steuereinheit der Leuchte interne Sollinformationen und stellen davon abhängig die Intensität der Lichtabgabe ein. Von der Unterseite her betrachtet ergibt sich dabei ein Erscheinungsbild der Leuchte, wie es in Figur 3 gezeigt ist, wobei nunmehr allerdings die Module 110 jeweils unterschiedliche Helligkeiten annehmen können.

Wie eingangs erwähnt, war es bei Leuchten mit mehreren getrennt einstellbaren Leuchtmitteleinheiten bislang üblich, für jede Einheit eine individuelle DALI-Betriebsadresse zu vergeben, um deren Helligkeit individuell einstellen zu können. Eine derartige Vorgehensweise würde bei der in den Figuren 1 bis 3 dargestellten Leuchte also dazu führen, dass die Leuchte 100 insgesamt 14 Betriebsadressen benötigt, wobei hierbei eventuelle zusätzlich benötigte Adressen beispielsweise für eine Indirektbeleuchtung nicht berücksichtigt werden. Offensichtlich ist eine derartige Vorgehensweise nicht praktikabel, da an einem entsprechenden DALI-System dann maximal vier derartige Leuchten angeschlossen werden könnten, da maximal 64 Adressen in dem System zur Verfügung stehen. Ein weiterer Nachteil dieser Vorgehensweise besteht darin, dass zur Einstellung der Helligkeit aller einzelnen Leuchtmitteleinheiten 110 eine umfangreiche Übermittlung von Daten erforderlich wäre, was aufgrund der Tatsache, dass die Kommunikation entsprechend dem DALI-Standard verhältnismäßig langsam ist, zu viel Zeit benötigen würde.

Erfindungsgemäß wird deshalb ein neues, so genanntes stützstellenbasiertes Konzept zum Ansteuern der Leuchte, genauer genommen der einzelnen Leuchtmitteleinheiten der Leuchte vorgeschlagen, welches nachfolgend näher erläutert werden soll.

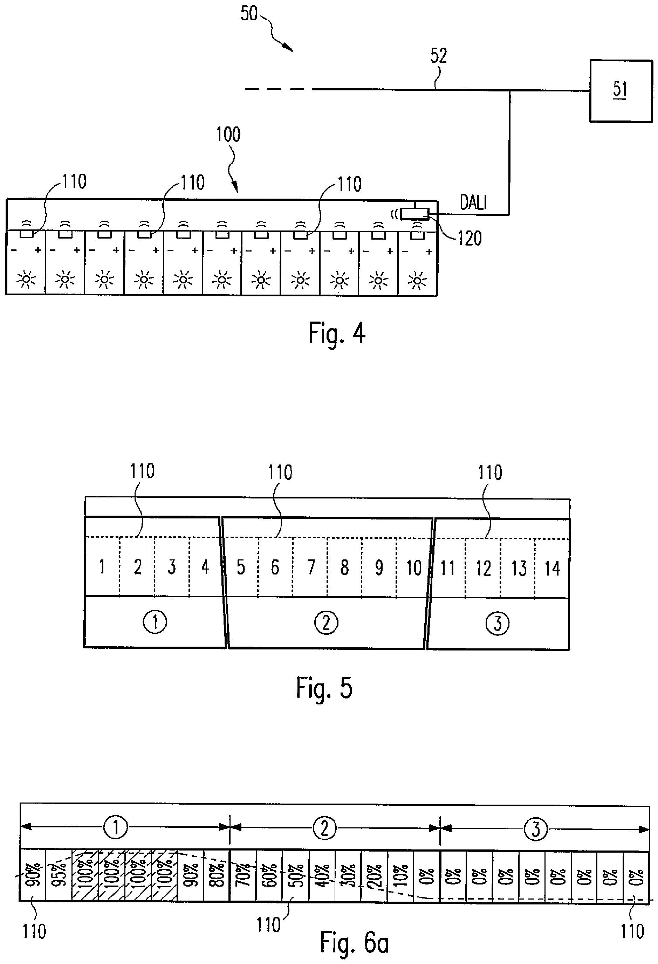

Die Ausgangssituation der erfindungsgemäßen Lösung ist schematisch nochmals in Figur 4 gezeigt. Dargestellt ist ein Beleuchtungssystem gemäß dem DALI-Standard, welches allgemein mit dem Bezugszeichen 50 versehen ist und eine zentrale Steuereinheit 51 aufweist. Ausgehend von dieser zentralen Steuereinheit 51 erstreckt sich die Busleitung 52 des Systems zu den verschiedenen Teilnehmern, also zu den verschiedenen Leuchten. Gezeigt ist im vorliegenden Fall ausschließlich die erfindungsgemäß ausgebildete Leuchte 100, welche an die Busleitung angeschlossen ist, wobei mehrere derartiger Leuchten Teilnehmer des Systems sein können oder auch Leuchten, welche lediglich eine einzige Lichtquelle aufweisen bzw. die Leuchtmittel einheitlich betreiben.

Die Leuchte 100 weist intern eine Steuereinheit 120 auf, welche über den DALI-Bus 52 mit der zentralen Steuereinheit 51 kommuniziert, insbesondere also die von der zentralen Steuereinheit 51 ausgegebenen DALI-Befehle empfängt. Intern ermittelt die Steuereinheit 120 dann in der nachfolgend beschriebenen erfindungsgemäßen Vorgehensweise individuelle Sollinformationen für die einzelnen Leuchtmitteleinheiten 110 und übermittelt diese an die Leuchtmitteleinheiten 110, welche diese Informationen dann in der entsprechenden Weise umsetzen, also insbesondere die Lichtabgabe mit der gewünschten Helligkeit realisieren. Im dargestellten Ausführungsbeispiel ist vorgesehen, dass die interne Steuereinheit der Leuchte 110 drahtlos mit den einzelnen Leuchtmitteleinheiten 110 kommuniziert. Selbstverständlich könnte allerdings leuchten-intern nochmals eine weitere Steuerleitung vorgesehen sein, welche das individuelle Übermitteln der internen Sollinformationen ermöglicht.

Der Grundgedanke der erfindungsgemäßen Lösung ist schematisch in Figur 5 dargestellt. Wie oben beschrieben beruht die Erfindung auf dem Gedanken, die Vielzahl von individuell steuerbaren Leuchtmitteleinheiten in Gruppen bzw. so genannte Stützpunkte aufzuteilen. Dargestellt ist in Figur 5 eine Aufteilung der insgesamt 14 Leuchtmitteleinheiten in drei Stützpunkte, wobei die ersten vier Module den Stützpunkt 1 bilden, die Module 5 bis 10 den Stützpunkt 2 und die Module 11 bis 14 den Stützpunkt 3. Offensichtlich könnte eine Aufteilung der Leuchtmitteleinheiten auf die drei Stützpunkte auch in anderer Weise erfolgen und auch die Anzahl der gewählten Stützpunkte könnte anders gewählt werden. Wesentlich ist jedoch, dass immer eine Gruppe zusammenhängender bzw. benachbarter Leuchtmitteleinheiten jeweils einen Stützpunkt bildet.

Die auf diese Weise gebildeten Stützpunkte werden nun in einem ersten Schritt wie gewöhnliche DALI-Leuchten behandelt. Das heißt, der Leuchte 100 werden von der zentralen Steuereinheit 51 eine der Anzahl der Stützpunkte bzw. Gruppen entsprechende Anzahl von DALI-Befehlen übermittelt. Diese werden von der internen Steuereinheit 120 der Leuchte empfangen und in interne Helligkeitssollwerte für die einzelnen Leuchtmitteleinheit 110 umgesetzt, wobei hierfür verschiedene Varianten bestehen.

In einer einfachsten Variante kann dabei vorgesehen sein, dass alle Leuchtmitteleinheiten eines Stützpunkts identisch angesteuert werden und insbesondere interne Sollinformationen erhalten, die den extern zugeführten Sollinformationen enthalten. In diesem Fall wird also ein von der zentralen Steuereinheit übermittelter Helligkeitssollwert, der einem Stützpunkt zugeordnet ist, unmittelbar an alle entsprechenden Leuchtmitteleinheiten des Stützpunkts ausgegeben. Das heißt, eine externe Sollinformation für einen Stützpunkt führt dazu, dass alle Leuchtmitteleinheiten des Stützpunkts einen entsprechenden internen Sollwert, der von der Steuereinheit der Leuchte generiert oder hier lediglich weiteregeleitet wurde, erhalten, und ihre Helligkeit anpassen.

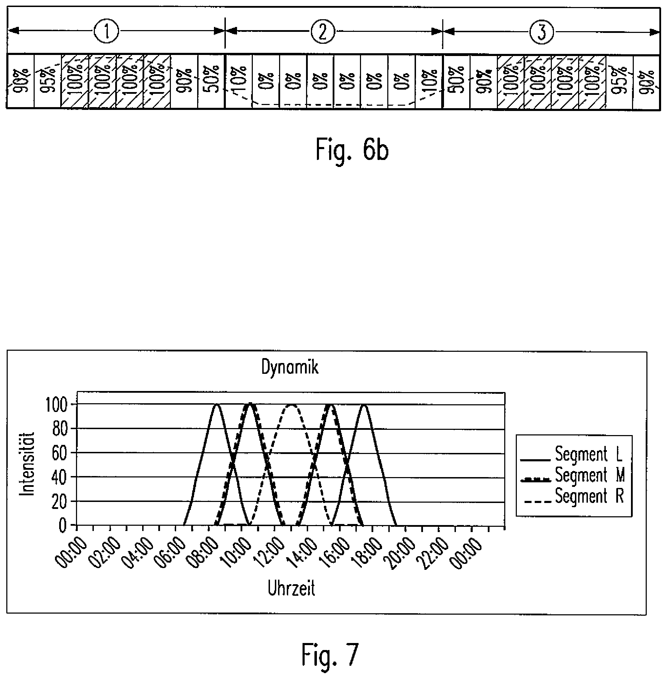

Da allerdings die oben beschriebene Vorgehensweise, bei der alle Leuchtmitteleinheiten eines Stützpunkts gleichartig betrieben werden, zu sprunghaften Veränderungen an den Übergängen zwischen zwei benachbarten Stützpunkten führen würde, wird vorzugsweise bei der Ermittlung der internen Sollinformationen eine Modifizierung vorgenommen, so dass sich ein kontinuierlicherer Übergang ergibt. Mehrere Varianten hierfür sind in den Figuren 6a und 6b dargestellt, wobei wiederum drei Stützpunkte existieren, diese nunmehr allerdings jeweils acht Module beinhalten.

Figur 6a zeigt nunmehr die Situation, bei der dem linken bzw. ersten Stützpunkt ein Helligkeitssollwert von 100% übermittelt wurde. In diesem Fall nehmen nun nicht alle Leuchtmitteleinheiten des linken Stützpunkts einen maximalen Helligkeitswert an und sämtliche anderen Leuchtmitteleinheiten der weiteren Stützpunkte sind ausgeschaltet, sondern es werden für jedes Modul Helligkeitswerte ermittelt wie sie dargestellt sind, so dass sich insgesamt gesehen ein linearer Verlauf zum Rand bzw. zu beiden Seiten hin ergibt. Lediglich zentral angeordnete Leuchtmitteleinheiten des ersten Stützpunkts nehmen tatsächlich die maximale Helligkeit von 100% an, die sich in der Nähe des Übergangsbereichs befindlichen Leuchtmitteleinheiten hingegen weisen bereits eine etwas reduzierte Helligkeit auf. Insgesamt wird auf diese Weise eine deutlich angenehmere Lichtabgabe sowie ein besseres Erscheinungsbild der Leuchte erzielt.

Eine zweite Möglichkeit ist in Figur 6b dargestellt, wobei nunmehr den beiden äußeren Stützpunkten jeweils ein maximaler Helligkeitswert von 100% übermittelt wurde. Wiederum werden die Helligkeiten der sich im Randbereich der Stützpunkte befindlichen Leuchtmitteleinheiten angepasst, so dass sich nunmehr jedoch kein linearer sondern ein quasi-logarithmischer Verlauf ergibt. Die Steilheit der Kurven sowie die Frage, wie genau der Übergang zwischen benachbarten Stützpunkten realisiert werden soll, kann dabei in der Steuereinheit der Leuchte einstellbar und somit variabel sein. Das heißt, der Benutzer kann selbst entscheiden, ob er eine lineare Anpassung der Helligkeit über die Länge hinweg oder eine eher logarithmische Anpassung bevorzugt.

Erkennbar anhand der Figuren 6a und 6b ist auch, dass ein externer Sollwert für einen bestimmten Stützpunkt auch Einfluss auf die internen Sollwerte von Leuchtmitteleinheiten eines benachbarten Stützpunkts haben kann. So werden bei dem Beispiel von Figur 6a beispielsweise die Leuchtmitteleinheiten des mittleren Stützpunkts durchaus mit einer gewissen Helligkeit betrieben, obwohl für diesen Stützpunkt extern der Helligkeitssollwert 0 vorgegeben wurde.

Letztendlich kann also bei den dargestellten Ausführungsbeispielen die Leuchte lediglich unter Verwendung von drei DALI-Adressen komfortabel gesteuert werden, wobei sich trotz allem ein äußerst ansprechendes Beleuchtungsbild ergibt.

Eine Weiterbildung des erfindungsgemäßen Konzepts kann darin bestehen, dass das von außen einfallende Tageslicht bzw. generell das zur Verfügung stehende Tageslicht berücksichtigt wird. Hierbei kann insbesondere vorgesehen sein, dass vorgegeben wird, dass lediglich bestimmte Stützpunkte tageslichtabhängig sind. Ist beispielsweise die längliche Leuchte senkrecht zu einer Fensterfront ausgerichtet, so kann vorgesehen sein, dass lediglich für den sich in der Nähe der Fenster befindlichen Stützpunkt eine Tageslichtabhängigkeit vorgegeben wird. Das heißt, die Helligkeitssteuerung erfolgt unter Berücksichtigung des Tageslichts, wobei in diesem Fall vorzugsweise zunächst der extern zugeführte Helligkeitssollwert durch die Tageslichtinformation modifiziert wird und dann wiederum auf Basis dieses modifizierten externen Sollwerts die Ermittlung der internen Sollwerte erfolgt. Durch diese Vorgehensweise ist sichergestellt, dass die Tageslichtabhängigkeit lediglich eines Stützpunkts nicht im Übergangsbereich zu einem benachbarten Stützpunkt, der nicht tageslichtabhängig sein soll, wiederum zu Sprüngen in der Lichtabgabe führt. Auch unter Berücksichtigung des modifizierten externen Helligkeitssollwerts kann dann nämlich wiederum eine Anpassung derart erfolgen, dass - wie anhand der Figuren 6a und 6b erläutert - ein kontinuierlicher Verlauf über die Länge der Leuchte hinweg erzielt wird. In einem gewissen Grad wirkt sich in diesem Fall dann also die Tageslichtabhängigkeit eines Stützpunkts wiederum auch auf die Lichtabgabe der Leuchtmitteleinheiten des benachbarten Stützpunkts aus. Selbstverständlich kann auch vorgesehen sein, dass alle Stützpunkte tageslichtabhängig angesteuert werden.

Schließlich könnte auch vorgesehen sein, dass jedem Stützpunkt eine zeitliche Dynamik zugewiesen wird, die die Tageszeit berücksichtigt. Ein Beispiel hierfür ist in Figur 7 dargestellt, wobei die Intensitäten für die drei Stützpunkte abhängig von der Uhrzeit dargestellt sind. Erkennbar ist, dass hierbei eine Verschiebung des Lichtfokus ausgehend vom linken Bereich der Leuchte zum rechten Bereich hin und anschließend wieder zurück erfolgen soll. Eine derartige Variante wäre beispielsweise dann sinnvoll, wenn die Leuchte derart positioniert ist, dass einzelne zu beleuchtende Bereiche unterschiedlich von dem Tageslicht beeinflusst werden. Auch in diesem Fall ist vorgesehen, dass durch die Dynamikkurve zunächst einmal die externen bzw. Gesamt-Sollwerte für die Stützpunkte vorgegeben werden und darauf basierend dann wiederum die internen Sollwerte für die einzelnen Leuchtmitteleinheiten abgeleitet werden.

Letztendlich wird also durch die erfindungsgemäße Vorgehensweise der Aufwand zum Ansteuern einer Leuchte, die mehrere bzw. eine Vielzahl individuell ansteuerbarer Leuchtmitteleinheiten enthält, deutlich vereinfacht. Wie bereits erwähnt kann dabei das Konzept nicht nur im Hinblick auf die Frage der Helligkeit sondern auch auf die Frage der Farbe bzw. des Farborts des abgegebenen Lichts angewendet werden. Somit kann dann die Leuchte mit einer deutlich reduzierten Anzahl von Betriebsadressen in ein Beleuchtungssystem eingebunden werden und trotz allem in komfortabler Weise in ihrer Lichtabgabe eingestellt werden.

## Patentansprüche

1. Verfahren zum Betreiben einer Leuchte (100), welche mehrere hintereinander angeordnete Leuchtmitteleinheiten (110) aufweist, die hinsichtlich ihrer Lichtabgabe individuell einstellbar sind,
wobei die Leuchtmitteleinheiten (110) mindestens zwei Gruppen zugeordnet sind und der Leuchte eine der Anzahl der Gruppen entsprechende Anzahl von externen Sollinformationen übermittelt wird, welche jeweils die Lichtabgabe einer Gruppe betreffen,
und wobei auf Basis der externen Sollinformationen für jede Leuchtmitteleinheit (110) individuelle interne Sollinformationen ermittelt werden.

2. Verfahren nach Anspruch 1,
**dadurch gekennzeichnet,**
**dass** die Leuchtmitteleinheiten (110) einer Gruppe jeweils identische interne Sollinformationen erhalten.

3. Verfahren nach Anspruch 1,
**dadurch gekennzeichnet,**
**dass** die Leuchtmitteleinheiten (110) innerhalb einer Gruppe unterschiedliche interne Sollinformationen erhalten.

4. Verfahren nach Anspruch 3,
**dadurch gekennzeichnet,**
**dass** für zumindest eine Leuchtmitteleinheit (110) die internen Sollinformationen den externen Sollinformationen entsprechen.

5. Verfahren nach Anspruch 4,
**dadurch gekennzeichnet,**
**dass** mindestens eine der Gruppen zumindest drei hintereinander angeordnete Leuchtmitteleinheiten (110) umfasst,
wobei die internen Sollinformationen für eine Leuchtmitteleinheit (110), welche sich nicht am Rand der Gruppe befindet, den externen Sollinformationen entspricht, und die internen Sollinformationen für eine Leuchtmitteleinheit (110), welche sich am Rand der Gruppe und benachbart zu einer weiteren Gruppe befindet, unter Berücksichtigung der externen Sollinformationen für die benachbarte Gruppe ermittelt wird.

6. Verfahren nach Anspruch 5,
**dadurch gekennzeichnet,**
**dass** die internen Sollinformationen für jeweils eine Leuchtmitteleinheit (110) einer Gruppe den zugehörigen externen Sollinformationen entspricht und die Sollinformationen für alle weiteren Leuchtmitteleinheiten (110) unter Berücksichtigung ihrer Position ermittelt werden.

7. Verfahren nach Anspruch 6,
**dadurch gekennzeichnet,**
**dass** die internen Sollinformationen für die weiteren Leuchtmitteleinheiten (110) durch Interpolation ermittelt werden.

8. Verfahren nach einem der vorherigen Ansprüche,
**dadurch gekennzeichnet,**
**dass** für die Leuchtmitteleinheiten (110) zumindest einer Gruppe die internen Sollinformationen unter Berücksichtigung des Tageslichts ermittelt werden.

9. Verfahren nach einem der vorherigen Ansprüche,
**dadurch gekennzeichnet,**
**dass** die externen Sollinformationen in Form von DALI-Befehlen übermittelt werden.

10. Leuchte (100), welche mehrere hintereinander angeordnete Leuchtmitteleinheiten (110) aufweist, die hinsichtlich ihrer Lichtabgabe individuell einstellbar sind, **dadurch gekennzeichnet, dass** die Leuchtmitteleinheiten (110) mindestens zwei Gruppen zugeordnet sind und die Leuchte (100) eine Steuereinheit (120) aufweist, welche dazu ausgebildet ist, eine der Anzahl der Gruppen entsprechende Anzahl von externen Sollinformationen zu empfangen und gemäß dem Verfahren nach einem der vorherigen Ansprüche individuelle interne Sollinformationen für jede Leuchtmitteleinheit (110) zu erzeugen.

11. Leuchte nach Anspruch 10,
**dadurch gekennzeichnet,**
**dass** die Steuereinheit (120) dazu ausgebildet ist, die internen Sollinformationen drahtlos zu übermitteln.

## Claims

1. A method for operating a lamp (100), which comprises several lighting units (110) arranged behind each other, which can be adjusted individually with respect to their light output,
wherein the lighting units (110) are associated with at least two groups and a number of external desired pieces of information corresponding to the number of groups is transmitted to the lamp, which pieces of information in each case relate to the light output of a group,
and wherein based on the external desired pieces of information, individual internal desired pieces of information are determined for each lighting unit (110).

2. A method according to Claim 1,
**characterized in**
**that** the lighting units (110) of a group in each case receive identical internal desired pieces of information.

3. A method according to Claim 1,
**characterized in**
**that** the lighting units (110) within a group receive different internal desired pieces of information.

4. A method according to Claim 3,
**characterized in**
**that** for at least one lighting unit (110) the internal desired pieces of information correspond to the external desired pieces of information.

5. A method according to Claim 4,
**characterized in**
**that** at least one of the groups comprises at least three lighting units (110) arranged behind each other,
wherein the internal desired pieces of information for a lighting unit (110), which is not located on the edge of the group, corresponds to the external desired pieces of information, and the internal desired pieces of information for a lighting unit (110), which is located on the edge of the group and adjacent to a further group, is determined taking into consideration the external desired pieces of information for the adjacent group.

6. A method according to Claim 5,
**characterized in**
**that** the internal desired pieces of information for in each case a lighting unit (110) of a group corresponds to the associated external desired pieces of information and the desired pieces of information for all further lighting units (110) are determined taking into consideration their position.

7. A method according to Claim 6,
**characterized in**
**that** the internal desired pieces of information for the further lighting units (110) are determined by interpolation.

8. A method according to any one of the preceding claims,
**characterized in**
**that** for the lighting units (110) at least of one group the internal desired pieces of information are determined taking into consideration the daylight.

9. A method according to any one of the preceding claims,
**characterized in**
**that** the external desired pieces of information are transmitted in the form of DALI commands.

10. A lamp (100), which comprises several lighting units (110) arranged behind each other, which can be adjusted individually with respect to their light output,
**characterized in that**
the lighting units (110) are associated with at least two groups and the lamp (100) has a control unit (120), which is designed to receive a number of external desired pieces of information corresponding to the number of groups and to generate individual internal desired pieces of information for each lighting unit (110) according to the method according to anyone of the preceding claims.

11. A lamp according to Claim 10,
**characterized in**
**that** the control unit (120) is designed to transmit the internal desired pieces of information wirelessly.

## Revendications

1. Procédé d'exploitation d'un luminaire (100) qui comprend plusieurs unités de moyens d'éclairage (110) disposées les unes derrière les autres, qui sont réglables individuellement en ce qui concerne leur émission de lumière,
les unités de moyens d'éclairage (110) étant attribuées à au moins deux groupes et un nombre d'informations de consigne externes correspondant au nombre de groupes, qui concernent l'émission de lumière de chaque groupe, étant transmises au luminaire,
et, sur la base des informations de consigne externes, des informations de consigne internes individuelles étant déterminées pour chaque unité de moyens d'éclairage (110).

2. Procédé selon la revendication 1,
**caractérisé en ce que**
les unités de moyens d'éclairage (110) d'un groupe reçoivent chacune des informations de consigne internes identiques.

3. Procédé selon la revendication 1,
**caractérisé en ce que**
les unités de moyens d'éclairage (110) d'un groupe reçoivent des informations de consigne internes différentes.

4. Procédé selon la revendication 3,
**caractérisé en ce que**
pour au moins une unité de moyens d'éclairage (110), les informations de consigne internes correspondent aux informations de consigne externes.

5. Procédé selon la revendication 4,
**caractérisé en ce que**
au moins un des groupes comprend au moins trois unités de moyens d'éclairage (110) disposées les unes derrière les autres,
les informations de consigne internes pour une unité de moyens d'éclairage (110), qui ne se trouve pas au bord du groupe, correspondent aux informations de consigne externes et les informations de consigne internes pour une unité de moyens d'éclairage (110), qui se trouve au bord du groupe et se trouve à proximité d'un autre groupe, sont déterminées en tenant compte des informations de consigne externes pour le groupe adjacent.

6. Procédé selon la revendication 5,
**caractérisé en ce que**
les informations de consigne internes pour chaque unité de moyens d'éclairage (110) d'un groupe correspondent aux infirmations de consigne externes correspondantes et les informations de consigne pour toutes les autres unités de moyens d'éclairage (110) sont déterminées en tenant compte de leur position.

7. Procédé selon la revendication 6,
**caractérisé en ce que**
les informations de consigne internes pour les autres unités de moyens d'éclairage (110) sont déterminées par interpolation.

8. Procédé selon l'une des revendications précédentes,
**caractérisé en ce que**
pour les unités de moyens d'éclairage (110) d'au moins un groupe, les informations de consigne internes sont déterminées en tenant compte de la lumière du jour.

9. Procédé selon l'une des revendications précédentes,
**caractérisé en ce que**
les informations de consignes externes sont transmises sous la forme d'instructions DALI.

10. Luminaire (100) qui comprend plusieurs unités de moyens d'éclairage (110) disposées les unes derrière les autres, qui sont réglables individuellement en ce qui concerne leur émission de lumière, **caractérisé en ce que**
les unités de moyens d'éclairage (110) sont attribuées à au moins deux groupes et le luminaire (100) comprend une unité de commande (120) qui est conçue pour recevoir un nombre d'informations de consigne externes correspondant au nombre de groupes et pour générer des informations de consigne internes individuelles pour chaque unité de moyens d'éclairage (110) selon le procédé selon l'une des revendications précédentes.

11. Luminaire selon la revendication 10,
**caractérisé en ce que**
l'unité de commande (120) est conçue pour transmettre les informations de consigne internes sans fil.
